Europäisches Patentamt

European Patent Office

Office européen des brevets

(19)

(11) Publication number· **0 300 557**
**A1**

# (12) EUROPEAN PATENT APPLICATION

(21) Application number: 88201488.9

(51) Int. Cl.⁴: **G11B 5/127**

(22) Date of filing: 12.07.88

(30) Priority: 15.07.87 NL 8701665

(43) Date of publication of application:
25.01.89 Bulletin 89/04

(84) Designated Contracting States:
AT BE DE ES FR GB IT NL

(71) Applicant: N.V. Philips' Gloeilampenfabrieken
Groenewoudseweg 1
NL-5621 BA Eindhoven(NL)

(72) Inventor: Zieren, Victor
c/o INT. OCTROOIBUREAU B.V. Prof.
Holstlaan 6
NL-5656 AA Eindhoven(NL)
Inventor: Ruigrok, Jacobus Josephus Maria
c/o INT. OCTROOIBUREAU B.V. Prof.
Holstlaan 6
NL-5656 AA Eindhoven(NL)

(74) Representative: Schrijnemaekers, Hubert
Joannes Maria et al
Internationaal Octrooibureau B.V. Prof.
Holstlaan 6
NL-5656 AA Eindhoven(NL)

(54) **Magnetic head for vertical recording.**

(57) Magnetic head for vertical recording, comprising a magnetic pole (1) of a soft-magnetic material. The magnetic pole is enclosed between two protective blocks and terminates on a contact face S. The protective blocks are provided with a magnetic portion (3A, 5A) and a non-magnetic portion (3B, 5B). A winding aperture (9, 11) having a plurality of turns W about the magnetic pole 1 is provided in the magnetic portion. To improve the efficiency, the magnetic head according to the invention is provided with a layer 13 and possibly with a layer 15 of a superconducting material.

FIG.2

## "Magnetic head for vertical recording."

The invention relates to a magnetic head for vertical recording, comprising: a magnetic pole of a soft-magnetic material and a body comprising two protective blocks provided with a contact face for co-operating with a magnetic recording medium, the magnetic pole being enclosed between the protective blocks and extending up to the contact face, and at least one of the protective blocks having a boundary face between a magnetic portion and a non-magnetic portion, the non-magnetic portion extending from the boundary face up to the contact face, whilst on the boundary face a winding aperture is provided in the magnetic portion via which aperture at least one turn is provided. A magnetic head of this type is known from British Patent Application 2,126,408 (herein incorporated by reference).

In magnetic recording by means of short wavelengths it is known that vertical recording, that is to say, recording in which the magnetization in the magnetic layer of the recording medium is effected in a direction perpendicular to the direction of movement of the recording medium and perpendicular to the surface of the medium, is more favourable than longitudinal recording in which the magnetization, as is assumed to be known, is effected in the direction of movement of the recording medium. An explanation of the said effect is that in longitudinal recording the demagnetizing field within the magnetic layer of the recording medium becomes larger as the wavelength becomes smaller, whereas the demagnetizing field in the case of vertical recording becomes smaller in that case. The recording medium may be in the form of a tape and it may consist of a support on which a soft-magnetic layer and a recording layer are provided.

In vertical recording it is important that the main component of the magnetic field coming from the magnetic head is perpendicular to the magnetic recording medium as much as possible. This is achieved with the magnetic head known from the said British Patent Application in that the magnetic pole is in the form of a thin film and is enclosed between two protective blocks which together constitute the body of the magnetic head, with each protective block consisting of a magnetic and a non-magnetic portion.

The known magnetic head has the drawback that during use magnetic stray flux occurs due to magnetic fields coming from the side faces of the magnetic pole so that a high efficiency cannot be achieved.

It is an object of the invention to improve the magnetic head described in the opening paragraph in such a way that an essentially higher efficiency can be achieved.

To this end the magnetic head according to the invention is characterized in that a layer of a superconducting material is provided between the magnetic pole and the said non-magnetic portion.

A superconducting material is herein understood to mean a material which is in a superconducting state and exhibits the full or substantially full Meissner effect. For practical reasons materials are preferred which have a relatively high critical temperature, for example above the temperature at which nitrogen liquefies at normal pressure. Suitable materials are, for example superconducting ceramic materials formed from compounds of lanthanum, barium, copper and oxygen such as $La_{1-x}Ba_xCuO_x$ with x between 0.15 and 0.6; lanthanum, strontium, copper and oxygen such as $La_{2-x}Sr_xCuO_4$ with x between 0.15 and 0.2; yttrium, barium, copper and oxygen such as $YBa_2Cu_3O_{7-d}$ with d between 0.0 and 1.0 or $Y_{0.4}Ba_{0.6}Cu_{1.0}O_{3.0}$; or yttrium, barium, strontium, copper and oxygen such as $YBa_{2-x}Sr_xCu_3O_8$, in which a part of the elements may be partly substituted, for example oxygen by fluorine or strontium by calcium.

The Meissner effect prevents magnetic field lines from emerging on the side face of the magnetic pole facing the layer of a superconducting material. Of course the two side faces of the magnetic pole, which will preferably be provided in the form of a thin film, may be coated with a layer of a superconducting material. The magnetic head according to the invention has the advantage that the occurrence of magnetic stray flux in the protective blocks can be prevented to a considerable extent, which results in a high magnetic flux density at the tip of the magnetic pole and therefore yields a high efficiency.

A favourable embodiment in which the occurrence of magnetic stray flux in the magnetic head is still further counteracted is characterized in that a further layer of a superconducting material extending between the magnetic pole and the winding aperture is provided at the area of the boundary face. A still further reduction of the loss flux of the magnetic head can be achieved by providing superconducting material in the winding aperture.

It is to be noted that DE-A 1.522.971 describes a method of increasing the dynamic range and improving the signal-to-noise ratio in electromagnetic tape recordings by means of a sound head having an oblique gap. To this end the sound head is locally provided with a diamagnetic material so as to intensify the magnetic field lines on the gap and to obviate a too large stray field on the gap.

However, the inductive magnetic heads shown in the Figures of DE-A 1,522,971 and obtained in accordance with the method described have such a shape and composition that they inhibit stray flux only at those locations where the stray flux is already small and does not exert much influence on the sensitivity of the magnetic heads. Therefore, as far as the efficiency of the magnetic heads shown is concerned, it does not make much difference whether the diamagnetic material is provided or not. The gaps of the magnetic heads shown have lengths which are also defined by parts of the diamagnetic material provided and are constant over a small gap height. This means that the gap length will vary very rapidly during operation, which is due to wear of the tape contact faces of the magnetic heads and will thus result in a short life of the heads.

The invention will now be described in greater detail by way of example with reference to the accompanying drawing in which

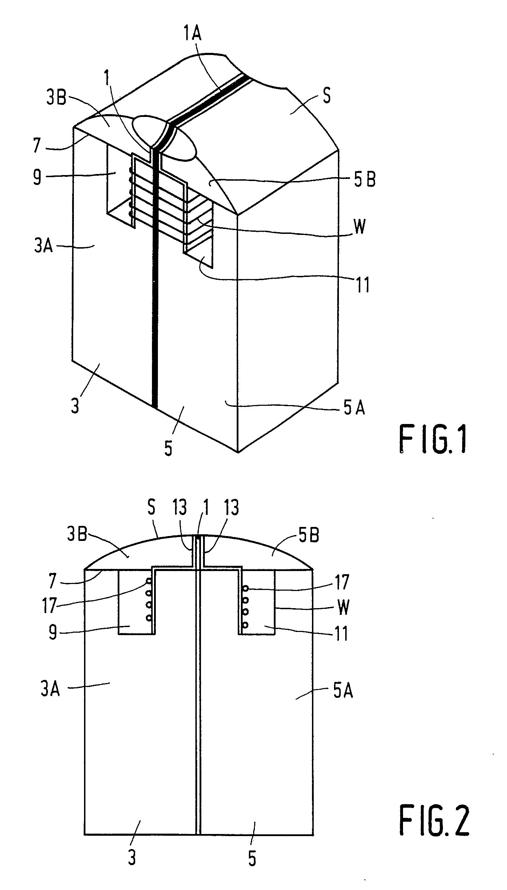

    Figure 1 is a perspective elevational view of an embodiment of the magnetic head according to the invention and

    Figure 2 is a diagrammatic cross-section of the magnetic head of Figure 1.

The magnetic head shown is intended to co-operate with a magnetic recording medium, for example a magnetic tape, which can be moved with respect to the magnetic head, and in which the magnetization in the magnetic layer of the recording medium is effected in a direction oriented perpendicularly to the direction of movement of the recording medium and perpendicularly to the surface of the medium.

The magnetic head comprises a magnetic pole 1 and two protective blocks 3 and 5 between which the pole 1 is enclosed. The magnetic pole is in the form of a thin film of a soft-magnetic material, for example an NiFe alloy (permalloy), an FeSiAl alloy (sendust) or an amorphous magnetic alloy and is provided on one of the two protective blocks by means of, for example cathode sputtering, deposition in vacuo or ion plattering. The protective blocks 3 and 5 are bonded together by a bonding layer (not shown) of, for example an adhesive, a low-melting point glass or a composition of metals and they are each provided with magnetic portions 3A and 5A and non-magnetic portions 3B and 5B, respectively.

The magnetic portions 3A and 5A are preferably formed from a magnetic material having a high permeability such as an MnZn ferrite. The portions 3B and 5B, which are not magnetic, may be formed from, for example a non-magnetic ferrite, crystal glass or suitable ceramic materials.

The magnetic and non-magnetic portions 3A, 3B and 5A, 5B constitute a boundary face 7 adjoined by two winding apertures 9 and 11 provided in the magnetic portions 3A and 5A. The magnetic head also comprises a coil formed from a plurality of turns W, which coil is provided around the magnetic pole 1 via the winding apertures 9 and 11. For guiding a recording medium, such as a magnetic tape along the magnetic pole 1, the magnetic head has a contact face S which is intersected approximately in the middle by the tip 1A of the magnetic pole 1.

To improve the efficiency, the magnetic head according to the invention is also provided with a layer 13 of a superconducting material, such as $YBa_2Cu_3O_{7-d}$ between the non-magnetic portions 3B and 5B on either side of the magnetic pole 1. A similar layer 15 is present on the boundary face 7 in the area on either side of the magnetic pole 1 extending between the magnetic pole 1 and the winding apertures 9 and 11. Furthermore, a layer 17 of the said superconducting material is provided on a wall portion, present in the winding aperture, of the protective blocks 3 and 5.

The layers 13, 15 and 17 may be provided by means of, for example sputtering or vapour deposition techniques.

The invention is of course not limited to the embodiment shown and various embodiments are possible within the scope of the invention.

## Claims

1. A magnetic head for vertical recording, comprising:
a magnetic pole of a soft-magnetic material and a body comprising two protective blocks provided with a contact face for co-operating with a magnetic recording medium, the magnetic pole being enclosed between the protective blocks and extending up to the contact face, and at least one of the protective blocks having a boundary face between a magnetic portion and a non-magnetic portion, the non-magnetic portion extending from the boundary face up to the contact face, whilst on the boundary face a winding aperture is provided in the magnetic portion via which aperture at least one turn is provided, characterized in that a layer of a superconducting material is provided between the magnetic pole and the said non-magnetic portion.

2. A magnetic head as claimed in Claim 1, characterized in that a further layer of a superconducting material extending between the magnetic pole and the winding aperture is provided at the area of the boundary face.

3. A magnetic head as claimed in Claim 2, characterized in that the further layer of a superconducting material extends into the winding aperture.

FIG.1

FIG.2

PHN 12185

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | DE-A-1 522 971 (ALTENKIRCH)<br>* Page 2, line 24 - page 3, line 20; claims 1,2,3,6; figures 1,2,3 * | 1,2 | G 11 B 5/127 |
| A | PATENT ABSTRACTS OF JAPAN, vol. 6, no. 217 (P-152)[1095], 30th October 1982, page 4 P 152; & JP-A-57 120 221 (SUWA SEIKOSHA K.K.) 27-07-1982<br>* Abstract * | 1-3 | |
| A | PATENT ABSTRACTS OF JAPAN, vol. 9, no. 329 (P-416)[2052], 24th December 1985, page 97 P 416; & JP-A-60 154 315 (SANYO DENKI K.K.) 14-08-1985<br>* Abstract * | 1-3 | |
| A | PATENT ABSTRACTS OF JAPAN, vol. 6, no. 22 (P-101)[900], 9th February 1982, page 67 P 101; & JP-A-56 143 511 (TOKYO SHIBAURA DENKI K.K.) 09-11-1981<br>* Abstract * | 1 | |
| A | US-A-3 098 181 (CIOFFI)<br>* Column 1, lines 10-13; column 2, lines 14-16; column 3, lines 8-24,69-73; column 4, lines 13-43; figures 1,2 * | 1-3 | TECHNICAL FIELDS SEARCHED (Int. Cl.4)<br><br>G 11 B<br>H 01 F<br>G 01 R<br>H 01 L |
| A | DE-C- 588 105 (SIEMENS & HALSKE AG) | | |

The present search report has been drawn up for all claims

| Place of search | Date of completion of the search | Examiner |
|---|---|---|
| THE HAGUE | 19-10-1988 | FUX J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)